Europäisches Patentamt

European Patent Office

Office européen des brevets

(19)

(11) Publication number: **0 103 169**
**A2**

(12) **EUROPEAN PATENT APPLICATION**

(21) Application number: **83107893.6**

(22) Date of filing: **10.08.83**

(51) Int. Cl.³: **G 01 N 27/56**

(30) Priority: **13.08.82 JP 139880/82**

(43) Date of publication of application: **21.03.84**
**Bulletin 84/12**

(84) Designated Contracting States: **CH DE FR GB IT LI NL SE**

(71) Applicant: **HITACHI, LTD., 6, Kanda Surugadai 4-chome Chiyoda-ku, Tokyo 100 (JP)**

(72) Inventor: **Ueno, Sadayasu, 847-33, Ichige, Katsuta-shi Ibaraki-ken (JP)**

(74) Representative: **Patentanwälte Beetz sen. - Beetz jun. Timpe - Siegfried - Schmitt-Fumian, Steinsdorfstrasse 10, D-8000 München 22 (DE)**

(54) **Air fuel ratio sensor.**

(57) An air-fuel ratio sensor which includes at least one solid electrolyte plate (10, 12) made of a stabilized zirconia with first and second electrodes (14, 20) being provided separately on one surface of the electrolyte plate and a third electrode (16) being provided on an opposed surface of the solid electrolyte plate (10, 12). The first and second electrodes (14, 20) are covered with a porous ceramic layer and the third electrode (16) is covered with an air tight ceramic layer. A power source supplies the third electrode (16) with current in order to enable a heating of the electrolytic plate.

AIR FUEL RATIO SENSOR

BACKGROUND OF THE INVENTION:

The present invention relates to an air-fuel ratio sensor and, more particularly, to an air-fuel ratio sensor for an internal combustion engine, the sensor being adapted to generate an output in response to a condition of oxygen molecules in an exhaust gas of the engine.

An air-fuel ratio sensor has been proposed wherein opposed electrodes are disposed on both surfaces of an oxygen ion conductive solid electrolyte, with one of the electrodes being exposed to the atomspheric air so as to generate, across the electrodes, an output voltage corresponding to a ratio of the oxygen concentration in the exhaust gas to that of the atmospheric air.

A disadvantage of the above proposed construction resides in the fact that the condition of the exhaust gas is detected with reference to the oxygen concentration in the atmospheric air and, consequently, it is impossible to change the reference.

To avoid the above-noted disadvantage Japanese Patent Publication No. 56-34058 (1981) proposes an air-fuel ratio sensor which is adapted to set the oxygen concentration on the reference electrode side at an appropriate value; however, a disadvantage of this proposed construction resides in the fact that difficulties are encountered when the air-fuel ratio starts at low temperature conditions.

SUMMARY OF THE INVENTION:

The air underlying the present invention essentially resides in providing an air-fuel ratio sensor suitable for a combustion engine of a vehicle which is readily able to begin functioning immediately even at low temperatures.

In accordance with advantageous features of the present invention, an air-fuel ratio sensor is provided which includes an electric power source for supplying current to an electrode formed on an electrolyte plate, with the power source being adapted to heat the electrode to a predetermined temperature.

In accordance with the present invention, an air-fuel ratio sensor is provided which includes a solid electrolyte plate having an oxygen ion conductivity, with a first electrode being provided on the solid electrolyte plate and being exposed to the exhaust gas. A second electrode provided on the electrolyte plate is exposed to gas containing oxygen, with the second electrode being insulated from the first electrode. A third electrode is provided in opposition to the first and second electrode on the electrolyte plate so as to generate migration of the oxygen ions between the second and third electrodes. The electric power source flows through the third electrode and heats the electrolyte plate.

Advantageously, in accordance with further features of the present invention, the first and second electrodes are arranged on the same surface of the solid electrolyte plate and the third electrode is arranged on an opposite surface of the electrolyte plate.

The solid electrolyte plate may, in accordance with the present invention, include a stablized zirconia and, for example, the first and second electrodes may be covered with a porous ceramic layer.

Additionally, in accordance with still further features of the present invention, the third electrode may be covered, in an air tight manner, with a ceramic layer.

Accordingly, it is an object of the present invention to provide an air-fuel ratio sensor for a combustion engine of a vehicle which readily begins to function even at low temperatures.

Another object of the present invention is to provide an air-fuel ratio sensor which is capable of being massed produced at a relatively low cost.

A still further object of the present invention resides in providing an air-fuel ratio sensor having a solid electrolyte which is relatively small in size and which has a relatively uniform temperature distribution.

Yet another object of the present invention resides in providing an air-fuel ratio sensor having a solid electrolyte which dispenses for the need for considering the thermal shock resistance thereof.

Yet another object of the present invention resides in providing an air-fuel ratio sensor which utilizes an electric power source of a relatively small size whereby the electric power for maintaining the operating temperature is relatively slight.

Another object of the present invention resides in providing an air-fuel ratio sensor for an internal combustion engine which functions realiably under all operating conditions of the engine.

These and other objects, features, and advantages of the present invention will become more apparent from the following description when taken in connection with the accompanying drawings which show, for the purposes of illustration only, one embodiment in accordance with the present invention.

BRIEF DESCRIPTION OF THE DRAWINGS:

Figure 1 is a cross-sectional view of an electrolytic plate arrangement for an air-fuel ratio sensor constructed in accordance with the present invention;

Figure 2 is a cross-sectional view of an electrolyte plate of the air-fuel sensor ratio constructed in accordance with the present invention;

Figure 3 is a cross-sectional view of an electrolytic plate arrangement for an air-fuel ratio sensor constructed in accordance with the present invention;

Figure 4 is a top plan view of an air-fuel ratio sensor of the present invention;

Figure 5 is a cross-sectional view taken along the line V-V in Figure 4;

Figure 6 is a bottom plan view of an air-fuel ratio sensor constructed in accordance with the present invention;

Figure 7 is a schematic circuit diagram providing an example of a method of driving the air-fuel ratio sensor of the present invention;

Figure 8 is a time chart graphically depicting the operation of a sequencer of an air-fuel ratio sensor constructed in accordance with the present invention; and

Figure 9 is a further time chart graphically depicting the sequence of a driving operation for an air-fuel ratio sensor constructed in accordance with the present invention.

DETAILED DESCRIPTION:

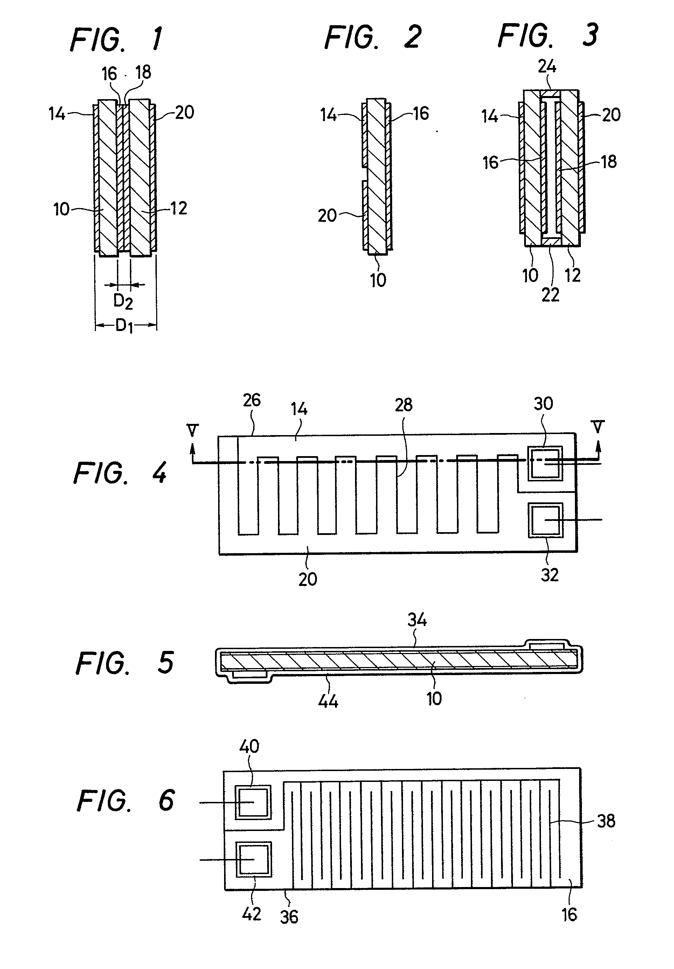

Referring now to the drawings wherein like reference numerals are used throughout the various views to designate like parts and, more particularly, to Figure 1, according to this figure, oppositely disposed solid electrolyte plates 10, 12 are fashioned of a material such as, for example, stabilized zirconia, and are formed by the green sheet method or the like, with the plates 10, 12 including, for example, yttria, calcia, etc, as stabilizers and, for example, alumina, silica, etc., as centering agents. By forming the solid electrolyte materials into plates 10, 12, are readily able to be cut out from a wafer by means of, for example, semi-conductor manufacturing processes and, as a result thereof, it is easy to mass produce plates 10, 12 at a relatively low cost. Additionally, by molding the solid electrolyte material into the plate: 10, 12 and baking the same in advance, and subsequently polishing the plates, 10, 12 to the required dimensions, the precision of the interelectrode distances $D_1$, $D_2$ and the surface roughness of the solid electrolyte plates 10, 12 can be improved.

As shown most clearly in Figure 2, a first electrode 14 and a third electrode 16 are formed on respective surfaces of the solid electrolyte plate 10. As shown in Figures 1 and 3, a third electrode 18 and a second electrode 20 are formed on respective surfaces of the solid electrolyte plate 12. The solid electrolyte plates 10, 12 are arranged so that the two third electrodes 16, 18 abut each other.

As shown in Figure 2, the first electrode 14 and the second electrode 20 are electrically isolated from each other and are formed on one surface of the single solid electrolyte plate 10, while the third electrode 16 is formed on the opposite surface.

As shown in Figure 3, spacers 22, 24 may be interposed between the solid electrolyte plates 10, 12, with the spacers 22, 24 spacing the third electrodes 16, 18 from each other.

In order to form a platinum group having a catalysis as a porous film a thick film noble-metal conductor paste is printed on the whole surface of the solid electrolyte plate 10 and then baked. After forming a semi-conductive layer 26, a slit 28, following a zig-zag course is formed in the conductive layer 26. Consequently, the first electrode 14 and the second electrode 20 are formed and are electrically insulated from each other. A bonding pad 30 is formed on the first electrode 14 in a vicinity or area of one end edge of the solid electrolyte, with a further bonding pad 32 being provided in the vicinity of the end edge on the second electrode 20. The bonding pads 30, 32 are formed, for example, by printing or baking of, for example, a platinum conductor paste. A principle surface of the solid electrolyte plate 10 is, as shown most clearly in Figure 5, covered with a porous ceramic layer 34 which conceals or covers the first electrode 14 and the second electrode 20. The porous ceramic layer 34 prevents the first electrode 14 and the second electrode 20 from directly being brought into contact with the exhaust gas. The ceramic material preferably has a transmissivity and catalysis for the exhaust gas and, additionally, a coefficient of thermal expansion substantially equal to that of the solid electrolyte plate 10.

As shown in Figure 6, a back surface of the solid electrolyte plate 10 is formed with a conductive layer 36 by, for example, a process wherein a thick-film of nobel metal conductor paste of gold having a weak catalysis or no catalysis and a heat resistance, is printed on the whole surface of the plate and then baked. Thereafter, interdigitated slits 38 are formed so that a zig-zag narrow stripe conductor or third electrode 16 is formed from one end of the electrolyte plate 10 to the other.

Bonding pads 40, 42 are respectively formed on the ends of the conductive layer 36. Additionally, a rear surface of the solid electrolyte plate 10 is covered with an air tight ceramic layer 44 which conceals or covers the third electrode 16. Preferably, the air tight ceramic layer 44 is formed of a glass based and ceramic doped material which is chemically stable and exhibits good electrical insulation qualities. The ceramic layer 44 may be provided with independent pores or may be of a non-porous structure.

By providing an air-tight ceramic layer 44, the exhaust gas is prevented from contacting the third electrode 16 and, when oxygen ions are caused to migrate between the second electrode 20 and the third electrode 16, the oxygen ions at the interface between the third electrode 16 and the solid electrolyte plate 10 can be prevented from diffusing into the exhaust gas and thereby altering the oxygen ion concentration.

An air-fuel ratio sensor constructed in accordance with the present invention generates, across the first electrode 14 and the third electrode 16, an output voltage which is proportional to the ratio of oxygen concentration at the interfaces of both the electrodes 14, 16 with the solid electrolyte plate 10. Where the oxygen ions migrate between the second electrode 20 and the third electrode 16, the oxygen ions are substituted by oxygen gas at the interface of the second electrode 20 and the oxygen gas diffuses into the exhaust gas through the porous ceramic layer 34.

Generally, since the sensitivity of the output voltage rises more when the third electrode 16 has a greater catalysis ratio to the first electrode 14 and the second electrode 20, to enhance the detection precision of the air-fuel ratio, advantageously, the third electrode 16 is spaced from the exhaust gas and a partial pressure of oxygen at the interface thereof is entirely based on a transfer of oxygen ions. Therefore, it is desirable for the third electrode 16 and the solid electrode plate 10 to have their interface set at or along a largest possible surface area and to be mechanically and electro-chemically held in close contact with each other.

The air-fuel ratio sensor of the present invention may be manufactured, for example, by first preparing a wafer plate, with a single wafer plate being, for example, $60 \times 60 \text{ mm}^2$, and with, for example, 72 chip plates each, for example, of a size of $5 \times 10 \text{ mm}^2$ being cut or taken from the single wafer plate. The wafer plate may have a thickness of, for example, 0.25 mm to reduce the electric power for the scribing by a laser beam and to lower the electric power necessary for heating to below 4 w, with the heating power being necessary for controlling or maintaining the solid electrolyte plate 10 at a constant temperature of, for example, 300°C in the exhaust gas.

A film of platinum forms the first electrode 14 and the second electrode 20, with a film of gold forming the third electrode 16. The electrodes 14, 16, 20 are formed on the wafer plate by sputtering and are heat treated with the thickness of the film being, for example, $1.5 \mu$m. Thereafter, as protective films or layers, stablized zirconia and a mixture of equal amounts of, for example, silica and stabilized zirconia are respectively formed on the platinum side and the gold side to, for example, a thickness of $0.5 - 1.0 \mu$m by high frequency sputtering. Subsequently, the electrode plate 10 is heat treated so as to strengthen the same. The area of the bonding pads are masked so as to prevent the protective films from being deposited in the area of the bonding pads during the last mentioned step.

Subsequently, the wafer plate is cut out into the chip plates by a laser beam and leads of, for example, stainless steel are wire bonded to the bonding pads and are attached to a plug. Thereafter, stabilized zirconia is deposited on both of the surfaces of the chip plate by, for example, plasma flame spraying.

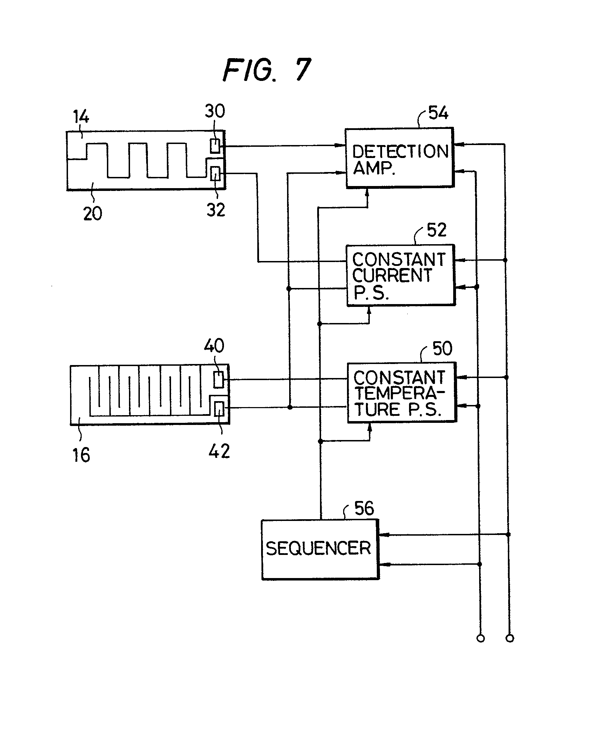

In order to operate or drive the air-fuel ratio sensor, as shown in Figure 7, a constant temperature control heating power source 50 is connected across the bonding pads 40, 42 on a rear surface of the solid electrolyte plate 10. The solid electrolyte plate 10 is subjected to a negative feedback control with a base potential at the bonding pad 42 so that the resistance across both the electrodes 40 and 42 becomes constant. A constant current power source 52 is connected across the bonding pads 32, 42, so as to subject the same to a negative feedback control with a base potential at the bonding pad 42 so that a prede.ermined quantity of oxygen ions may flow in the solid electrolyte plate 10 between the second electrode 20 and the third electrode 16. A detection amplifier 54 is provided for amplifying an air-fuel ratio signal to a required level, with the amplifier 54 being connected between the bonding pad 30 of the first electrode 14 and the bonding pad 42 of the third electrode 16. The constant temperature control heating power source 50, the constant current power source 52, and the detection amplifier 54 operate in a sequence determined by a sequencer 56.

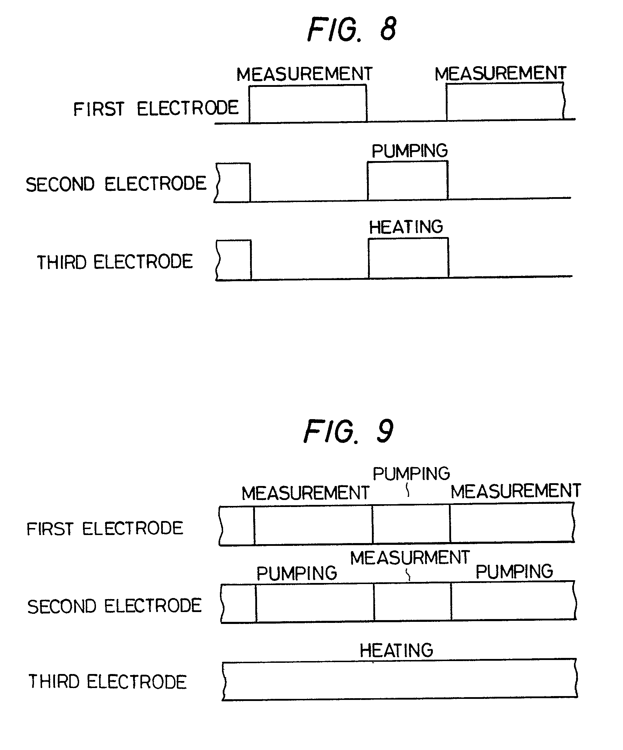

The sequencer 56, as shown in Figure 8, operates so that during a pumping time or a period of time during which the oxygen ions are maintained or kept from flowing from the second electrode 20 into the solid electrode plate 10 and the measuring time or time during which the oxygen concentration is measured by the first electrode 14 are time shared at an appropriate proportion. If necessary, the heating current from the third electrode 16 may be interrupted during a measurement of the oxygen concentration.

Additionally, as shown in Figure 9, the oxygen ions are caused to flow between the first electrode 14 and the second electrode 20 alternately in time and the oxygen concentration is measured with the first electrode 14 and the second electrode 20 alternately within time zones during which the oxygen ions are not caused to flow. Thus, the air-fuel ratio sensor can be directly heated by using the third electrode 16 as a heater and may be actuated immediately even after a low temperature starting of an internal combustion engine. Accordingly, the air-fuel ratio sensor of the present invention is readily adapted to provide a feedback control of the air-fuel ratio not only during an idling operation of the internal combustion engine but also immediately after a low temperature starting. Additionally, since the solid electrolyte plate 10 may be heated by the third electrode 16 held in close contact therewith, the rate of heating may remarkably be enhanced. Furthermore, since the solid electrolyte plate 10 is thin and formed of a relatively small sized chip plate and since the heat capacity thereof may be relatively small, the amount of electric power for maintaining the electrolyte plate 10 at its operating temperature may be relatively slight.

Additionally, since the solid electrolyte plate 10 is relatively small sized, the temperature distribution thereof can be uniform and there is no need to consider a thermal shock resistance thereof. Thus, the solid electrolyte plate 10 may be baked into a structure of lower resistivity and, as a result thereof, the internal resistance of the sensor is reduced and the input resistance condition of the detection amplifier is improved. Moreover, in the manufacturing of an air-fuel ratio sensor in accordance with the present invention, it is possible to use the green sheet method, thick film printing, baking, thin-film sputtering, laser trimming, laser scribing, wire bonding, etc. These processes or manufacturing techniques enable the use of manufacturing equipment generally used for manufacturing semiconductor devices so that the air-fuel ratio sensor of the present invention may be easily mass produced.

While I have shown and described only one embodiment in accordance with the present invention, it is understood that the same is not limited thereto but is suspectible of numerous changes and modificatons as known to one having ordinary skill in the art, an I therefore do not wish to be limited to the details shown and described herein, but intend to cover all such modifications as are encompassed by the scope of the appended claims.

0103169

- 1 -

I CLAIM:

1. An air-fuel ratio sensor for an engine, the sensor comprising:

at least one solid electrolyte plate (10) having an oxygen ion-conductivity;

a first electrode (14) provided on said at least one solid electrolyte plate and adapted to be exposed to an exhaust gas of the engine;

a second electrode (20) provided on said enabling plate and insulated from said first electrode, said second electrode being adapted to be exposed to a gas containing oxygen;

a third electrode (16) provided on said electrolyte plate at a position opposed to said first and second electrodes for enablying a migration of oxygen ions between said second and third electrodes; and

a power source means operatively connected with said third electrode for heating said electrolyte plate (Fig. 2).

2. An air-fuel ratio sensor as claimed in claim 1, wherein said first and second electrodes (14, 20) are arranged on a first surface of said solid electrolyte plate and said third electrode (16) is arranged on an opposite surface of said solid electrolyte plate.

3. An air-fuel ratio sensor as claimed in claim 1, wherein said solid electrolyte plate (10) includes stabilized zirconia.

4. An air-fuel ratio sensor as claimed in claim 1, wherein said first and second electrodes (14, 20) are covered with a porous ceramic layer.

5. An air-fuel ratio sensor as claimed in claim 1, wherein said third electrode (16) is covered with an air tight ceramic layer.

6. An air-fuel ratio sensor as claimed in claim 1, wherein at least two electrolyte plates (10, 12) are provided, each of said electrolyte plates having disposed thereon the first and second electrodes (14, 20) on a first surface thereof and the third electrode (16, 18) on an opposite surface thereof, said two electrolyte plates (10, 12) being disposed in such a manner that the third electrodes (16, 18) are arranged in opposition to each other (Fig. 3).

7. An air-fuel ratio sensor as claimed in claim 6, wherein said third electrodes (16, 18) are disposed in abutting relationship (Fig. 1).

8. An air-fuel ratio sensor as claimed in claim 6,

- 3 -

wherein means (22, 24) are provided for spacing said electrolyte plates from each other.

9. An air-fuel ratio sensor as claimed in claim 1, wherein means (34, 44) are provided for preventing a direct contact of the first and second electrodes with the exhaust gas.

10. An air-fuel ratio sensor as claimed in claim 9, wherein said means (34, 44) for preventing includes a porous layer of a ceramic material.

11. An air-fuel ratio sensor as claimed in claim 1, wherein said power source means includes a constant temperature heating power source (50) operatively connected to said third electrode (16), and a constant current power source means (52) operatively connected to the second and third electrodes (20, 16).

12. An air-fuel ratio sensor as claimed in claim 11, wherein a detection amplifier means (54) is provided for amplifying a fuel ratio signal to a predetermined level, said detection amplifier means (54) being operative connected to the first and third electrodes (14, 16).

- 4 -

13. An air-fuel ratio sensor as claimed in claim 12, wherein sequencer means (56) are provided for sequentially operating said constant temperature control heating power source (50), said constant current power source (52), and said detection amplifier means (54).

FIG. 1

FIG. 2

FIG. 3

FIG. 4

FIG. 5

FIG. 6

## FIG. 7

## FIG. 8

FIRST ELECTRODE    MEASUREMENT      MEASUREMENT

SECOND ELECTRODE      PUMPING

THIRD ELECTRODE      HEATING

## FIG. 9

         PUMPING

FIRST ELECTRODE    MEASUREMENT      MEASUREMENT

         MEASURMENT

SECOND ELECTRODE    PUMPING      PUMPING

THIRD ELECTRODE      HEATING